# EUROPÄISCHE PATENTSCHRIFT

(11) **EP 1 256 473 B1**
(45) Veröffentlichungstag und Bekanntmachung des Hinweises auf die Patenterteilung: **22.08.2007**
(21) Anmeldenummer: 02009910.7
(22) Anmeldetag: 03.05.2002
(51) Int. Cl.: B60J 7/02, B60J 7/08, B60J 7/14

(54) **Cabriolet-Fahrzeug mit einem rückwärtigen Dachteil**
Convertible vehicle with a rear roof part
Véhicule convertible avec un élément de toit arrière

(30) Priorität: 12.05.2001 DE 10123229
(43) Veröffentlichungstag der Anmeldung: 13.11.2002
(73) Patentinhaber: Wilhelm Karmann GmbH, 49084 Osnabrück (DE)
(72) Erfinder: Bunsmann, Winfried, 49143 Bissendorf (DE); Russke, Klaus, 49143 Bissendorf (DE)
(74) Vertreter: Busse & Busse Patentanwälte

(56) Entgegenhaltungen:
- EP-A- 0 764 553
- DE-A- 19 737 259
- DE-A- 19 936 252
- DE-C- 4 326 329
- US-A- 5 033 789

## Beschreibung

Die Erfindung betrifft ein Cabriolet-Fahrzeug mit einem im rückwärtigen Fahrzeugbereich ablegbaren Dach nach dem Oberbegriff des Anspruchs 1.

Aus der DE 197 49 194 A1 ist ein Cabriolet-Fahrzeug bekannt, das ein rückwärtiges Dachteil aufweist, welches in seinem rückwärtigen Bereich schwenkbar an der Karosserie angelenkt ist.

Das Dachteil ist dabei um diese rückwärtige Schwenkachse zwischen einer im wesentlichen horizontalen Offenstellung und einer schräg gestellten Schließstellung beweglich. Das Dachteil ist allerdings nicht vollständig verlagerbar. Durch die Anbindung seines rückwärtigen Bereichs an die Schwenkachse, die im Bereich der Fensterbrüstungslinie liegt, ist das rückwärtige Dachteil auch in Offenstellung des Daches nicht unter die Fensterbrüstungslinie zu versenken. Es steht somit optisch störend hervor. Zudem muß, um eine Kofferraumöffnung noch zu ermöglichen, das abgelegte Dachteil selbst auch in entgegengesetzter Richtung schwenkbar sein, was den konstruktiven Aufwand erhöht.

Aus der DE 199 36 252 A1 ist ein Cabriolet-Fahrzeug mit einem im rückwärtigen Fahrzeugbereich ablegbaren Dach nach dem Obergriff des Anspruchs 1 bekannt, bei dem über zwei hintereinander angeordnete Ausleger einerseits ein hinteres Dachteil und ein diesem vorgeordnetes Dachteil in eine rückverschwenkte Lage in eine Offenposition des Daches zu überführen ist. Dabei ist das rückwärtige Dachteil um 180° heckwärts zu verschwenken über einen Ausleger, der eine horizontale Achse aufweist, die sich heckwärts hinter einer vorderen Achse und damit im heckwärtigen Endbereich des hinteren Dachteils erstreckt. In der abgelegten Stellung dieses Daches ist ein vorderes Dachteil oberhalb der Innenseite des hinteren Dachteils in einem Paket in einem Kofferraum gelegen, dessen Raumvolumen beinahe vollständig durch das Dach eingenommen wird.

Aus der EP 0 764 553 A1 ist ein Cabriolet-Fahrzeug bekannt, bei dem ein hinterer Dachteil so ausgestaltet ist, daß ein vorderer Dachteil von diesem bei einer Öffnungsbewegung des Daches aufgenommen werden kann. Das hintere Dachteil ist über Schwenkhebel an der Karosserie befestigt, die sich im geschlossenen Zustand des Daches im Bereich des hinteren Dachteiles befinden und auch dort an der Karosserie angelenkt sind. Zum Verschwenken und Ablegen des Daches in einen Verdeckaufnahmeraum ist das hintere Dachteil mit dem eingeschobenen vorderen Dachteil gegen die Vorwärtsfahrtrichtung des Fahrzeuges zu verschwenken und mit der Außenseite des hinteren Dachteiles nach unten in dem Aufnahmeraum für das Dach abzulegen. Damit ist ein heckwärtiger Verdeckaufnahmeraum vorzusehen, der zur Beförderung von Gepäck und dergleichen nicht mehr zur Verfügung steht.

Aus der DE 43 26 329 ist ein Cabriolet-Fahrzeug bekannt, bei dem ein vorderes Dachteil nach Art eines herkömmlichen Schiebedaches ausgebildet ist und ein hinteres Dachteil eine transparente Heckscheibe ausbildet. Das das Schiebehebedach umfassende vordere Dachteil ist unter die Heckscheibe verfahrbar und anschließend mit dieser als Komplettpaket von das hintere Dachteil tragenden Säulen in einen Stauraum zwischen Sitzen und Hinterachse abzusenken. In diesem Zustand bildet das hintere Dachteil die Abdeckung des Stauraumes nach oben hin.

Es ist Aufgabe der vorliegenden Erfindung, ein Cabriolet-Fahrzeug mit einem rückwärtigen Dachteil der eingangs genannten Art zu schaffen, das zur Dachöffnung um eine rückwärtige Achse in die Karosserie einzuschwenken ist und die bei geöffnetem Dach die Karosserielinie nicht durch überstehende Dachteile stört und zudem den zur Verfügung stehenden Kofferraum in nur unwesentlichem Maße beeinträchtigt.

Die Erfindung löst diese Aufgabe durch ein Cabriolet-Fahrzeug mit den Merkmalen des Anspruchs 1. Vorteilhafte Ausgestaltungen ergeben sich aus den Unteransprüchen.

Mit dem erfindungsgemäßen Cabriolet-Fahrzeug ist eine Ablage des Daches vollständig unterhalb der Festerbrüstungslinie möglich. Selbst wenn weitere Dachteile oberhalb des rückwärtigen Dachteils abgelegt werden, können diese mit dem rückwärtigen Dachteil derart eingeschwenkt werden, daß bei geöffnetem Dach die Karosserielinie nicht durch überstehende Dachteile gestört ist. Durch die Beabstandung der Dachteile zur Schwenkachse ist zudem ein großer Hebelarm erreicht, so daß auch bei manueller Betätigung nur eine geringe Kraft aufzuwenden ist, um etwa ein Drehmoment aufzubringen, mit dem das Dach aus der geöffneten Lage in eine aufgestellte Position des hinteren Dachteils verbracht wird. Somit kann eine billige und einfache sowie einfach zu bedienende Konstruktion zur Verfügung gestellt werden.

Der Kofferraum ist zudem in nahezu vollem Umfang erhalten, insbesondere dann, wenn die Ausleger, die das rückwärtige Dachteil mit der heckseitigen Schwenkachse verbinden, den Fahrzeugseiten zugeordnet sind und somit im Randbereich, beispielsweise hinter ohnehin vorhandenen Verkleidungen, angeordnet werden können.

Wenn die Schwenkachse im äußersten Heckbereich liegt, ist auch dadurch der Kofferraum nicht beeinträchtigt. Durch die abgesenkte Lage der Schwenkachse ist zudem die Öffnung einer Kofferraumklappe ohne Einschränkungen ermöglicht. Gleichzeitig ist der Schwerpunkt des Fahrzeugs durch die Absenkung der Schwenkachse gesenkt, was das Fahrverhalten positiv beeinflußt.

Weitere Vorteile und Einzelheiten der Erfindung ergeben sich aus einem nachfolgend beschriebenen und in der Zeichnung dargestellten Ausführungsbeispiel des Gegenstandes der Erfindung. In der Zeichnung zeigt:
- Fig. 1: eine schematische, perspektivische Ansicht eines erfindungsgemäßen Cabriolet-Fahrzeugs bei geschlossenem Dach,
- Fig. 2: eine ähnliche Ansicht wie Fig. 1 bei teilweise geöffnetem flexiblem Dachteil,
- Fig. 3: eine ähnliche Ansicht wie Fig. 2 während der weiteren Öffnung des flexiblen Dachteils,

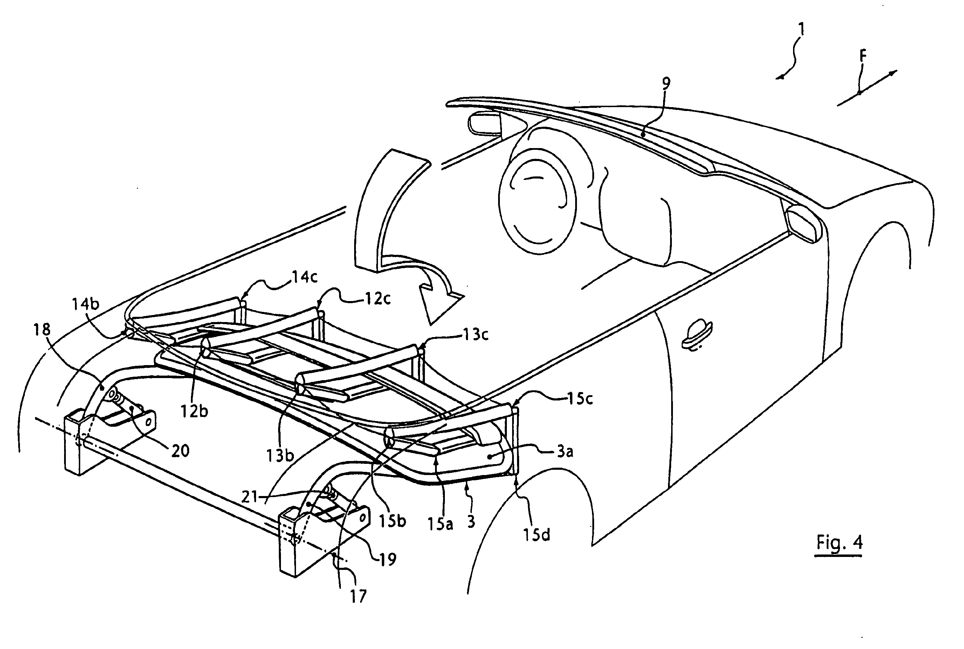

- Fig. 4: eine ähnliche Ansicht wie Fig. 3 bei vollständig geöffnetem Dach,
- Fig. 5: eine schematische Seitenansicht des Cabriolet-Fahrzeugs bei vollständig geschlossenem Dach,
- Fig. 6: eine ähnliche Ansicht wie Fig. 5 während der Öffnung des flexiblen Dachteils,
- Fig. 7: eine ähnliche Ansicht wie Fig. 6 bei vollständiger Öffnung des flexiblen Dachteils und noch geschlossener Stellung eines starren hinteren Dachteils,
- Fig. 8: eine ähnliche Ansicht wie Fig. 7 bei vollständig geöffnetem Dach,
- Fig. 9: eine Detailansicht eines Längsträgers von der Seite gesehen,
- Fig. 10: eine Draufsicht auf den Längsträger nach Fig. 9,
- Fig. 11: eine perspektivische Ansicht des Längsträgers in seinem Gelenkbereich,
- Fig. 12: eine Seitenansicht des Längsträgers bei aufgeschwenkter Stellung der Teile gegeneinander,
- Fig. 13: eine Seitenansicht der gegeneinander aufgeschwenkten Teile des Längsträgers,
- Fig. 14: einen Schnitt entlang der Linie XIV-XIV in Fig. 10,
- Fig. 15: einen Schnitt entlang der Linie XV-XV in Fig. 10,
- Fig. 16: einen Schnitt entlang der Linie XVI-XVI in Fig. 9.

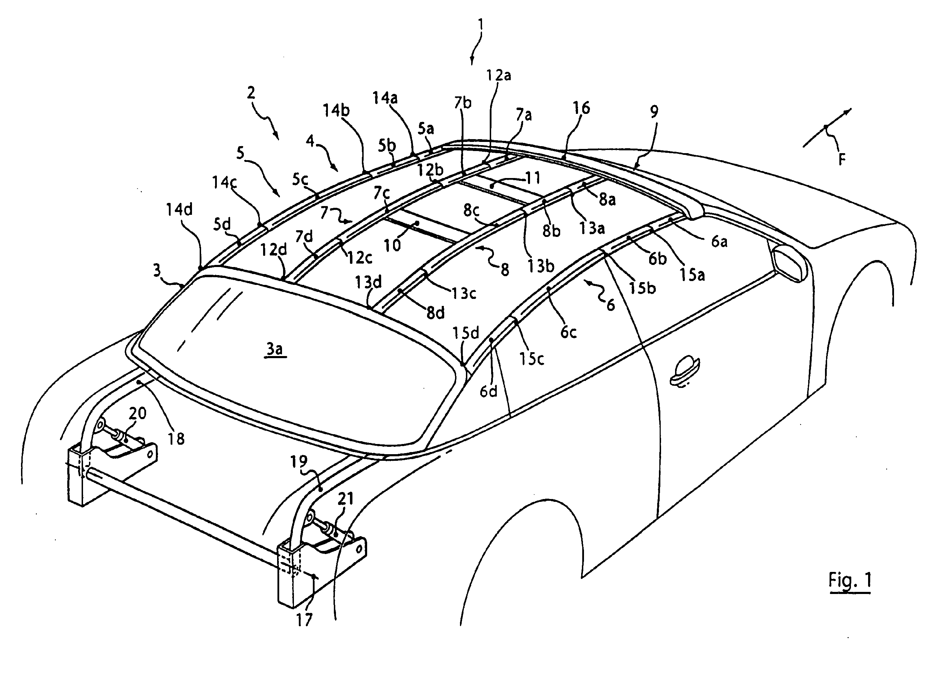

Das in Fig. 1 dargestellte Cabriolet-Fahrzeug 1 weist ein insgesamt bewegliches Dach 2 auf, das ein starres hinteres Dachteil 3 und ein daran in Fahrtrichtung F anschließendes flexibles Dachteil 4 umfaßt.

Das hier starre hintere Dachteil 3 mit der Heckscheibe 3a ist über eine karosserieseitige, quer verlaufende Horizontalschwenkachse 17 schwenkbar gehalten. Beispielsweise besteht das Dachteil 3 außerhalb der Heckscheibe 3a aus Kunststoff oder Leichtmetall. Die Horizontalschwenkachse 17 liegt dabei in geschlossener Stellung des Daches 2 (Fig. 1) unterhalb und deutlich heckwärts des hinteren Dachteils 3. Die Schwenkachse 17 ist über zwei seitliche Ausleger 18,19, die als Schwenkarme dienen und starr an dem hinteren Dachteil 3 festgelegt sind, mit diesem verbunden. Die Ausleger 18,19 sind dabei den Fahrzeugaußenseiten zugeordnet und beispielsweise über Hydraulikzylinder oder andere Antriebsorgane 20,21 betätigbar. Auch eine rein manuelle Betätigung oder eine Unterstützung durch Gasdruckzylinder in der manuellen Betätigung ist möglich. Durch die seitliche Lage der Ausleger 18,19 können diese etwa hinter Verkleidungen angeordnet sein und daher das Kofferraumvolumen uneingeschränkt lassen. Das hintere Dachteil 3 kann auch im wesentlichen nur durch eine Panorama-Heckscheibe gebildet sein.

Abweichend von der gezeichneten Ausführung, kann auch das Dach 2 im wesentlichen insgesamt flexibel ausgebildet sein und in seinem rückwärtigen Bereich beispielsweise lediglich einen Bügel aufweisen, der an Auslegern 18,19 gehalten ist. In jedem Fall kann das Dach 2 von einem einheitlichen Bezug (nicht gezeichnet) übergriffen sein, um damit eine einheitliche Optik sicherzustellen.

Im vorliegenden Ausführungsbeispiel ist das Cabrioletfahrzeug 1 mit einer rückwärtigen Sitzreihe ausgestattet, was grundsätzlich nicht zwingend ist. Ein erfindungsgemäßes Cabriolet-Fahrzeug kann auch ein Zweisitzer sein.

Der Dachbezug des flexiblen Dachbereichs 4 ist zwischen fahrzeugrandseitigen Rahmenabstützungen 5,6 und über Träger 7,8 gespannt. Erfindungsgemäß sind die Träger 7,8 in Fahrzeuglängsrichtung angeordnet und verbinden im Ausführungsbeispiel das starre hintere Dachteil 3 mit einem oberen Bereich des vorderen Windschutzscheibenrahmens 9. An Stelle der zwei in Fig. 1 gezeichneten Träger 7,8 neben den randseitigen Rahmenabstützungen 5,6 kann auch eine andere Anzahl von zusätzlichen Trägern 7,8 vorgesehen sein. Insbesondere kann auch ein längs erstreckter Träger in der vertikalen Fahrzeuglängsmittelebene liegen.

Im Ausführungsbeispiel sind Querverbinder 10,11 zwischen den Längsträgern 7,8 vorgesehen. Dieses ist allerdings nicht zwingend. Andererseits können auch derartige Querverbinder zwischen den Längsträgern 7,8 und den randseitigen Rahmenabstützungen 5,6 vorgesehen sein. Die Querträger 10,11 verlaufen dicht unterhalb der oberen Seite der Längsträger 7,8, wodurch sie sich im aufgespannten Bezug nicht abzeichnen.

Die längs verlaufenden Träger 7,8 und die randseitigen Rahmenprofile 5,6 sind über einen frontseitigen Querträger 16, der zur Anlage an den Windschutzscheibenrahmen 9 dient, miteinander verbunden.

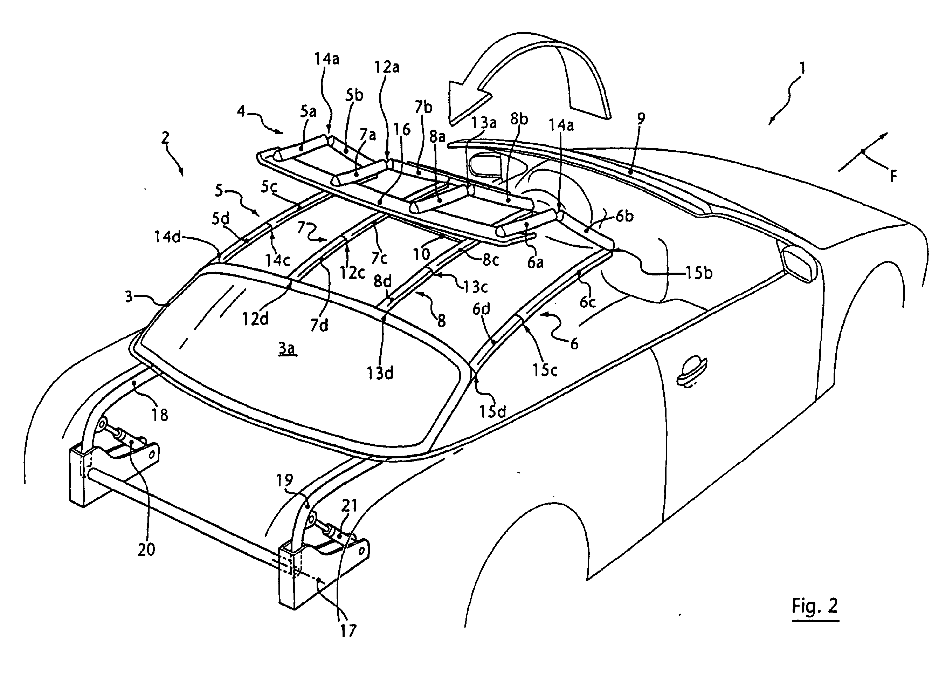

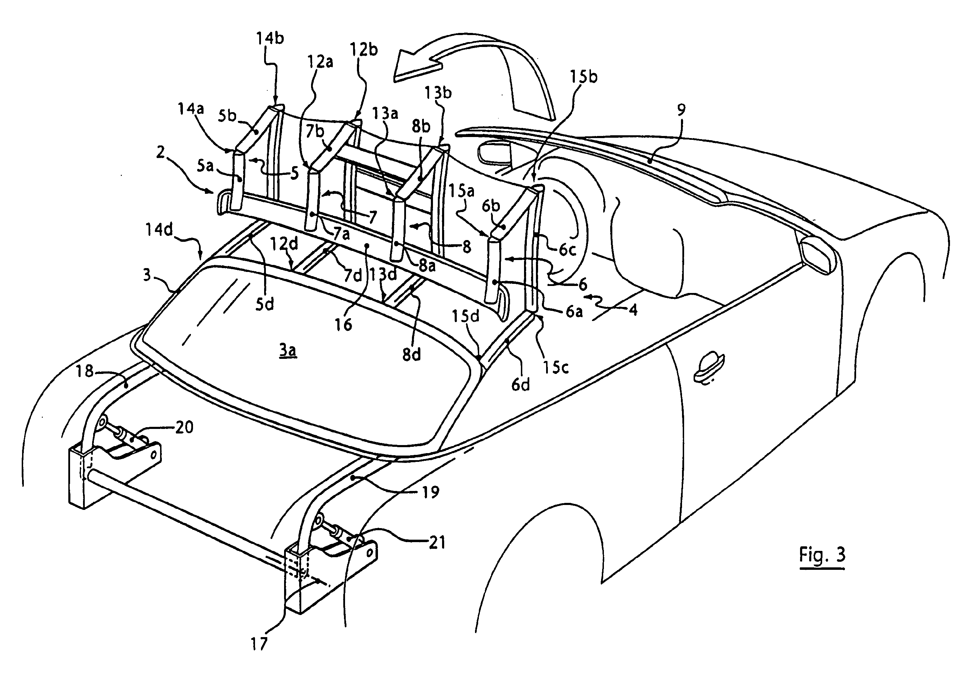

Die längs verlaufenden Träger 7,8 sind durch im Ausführungsbeispiel jeweils drei Gelenke 12a,12b,12c bzw. 13a,13b,13c in ihrem Längsverlauf in vier Abschnitte 7a,7b,7c,7d;8a,8b,8c,8d geteilt. Auch die äußeren Rahmenabstützungen 5;6 sind in entsprechender Weise jeweils mit drei Gelenken 14a,14b,14c bzw. 15a,15b,15c über ihren Längsverlauf versehen und in die entsprechenden Abschnitte 5a,5b,5c,5d;6a,6b,6c,6d geteilt. Der flexible Dachbereich ist um diese Gelenke faltbar, wie in den Fig. 2 und 3 dargestellt ist. Auch eine andere Anzahl von Gelenken ist möglich.

Die Lage der jeweils einander zugeordneten Gelenke 12a,13a,14a bzw. 12b,13b,14b,12c,13c,14c der jeweiligen Träger 7,8 bzw. Rahmenabstützungen 5,6 ist dabei so aufeinander abgestimmt, daß mit einer Faltungsbewegung jeweils alle einander zugeordneten Gelenke 12a,13a,14a,15a bzw. 12b,13b,14b, 15b bzw. 12c,13c,14c,15c gleichzeitig eingefaltet werden können. Dies bedeutet nicht, daß die jeweils nebeneinanderliegenden Gelenke, beispielsweise 12a,13a,14a,15a alle auf einer gemeinsamen Querlinie im Fahrzeug liegen. Vielmehr ist die Lage der einander zugeordneten Gelenke durch die Wölbung und den Bewegungsablauf des Dachöffnens und -schließens aufeinander abgestimmt.

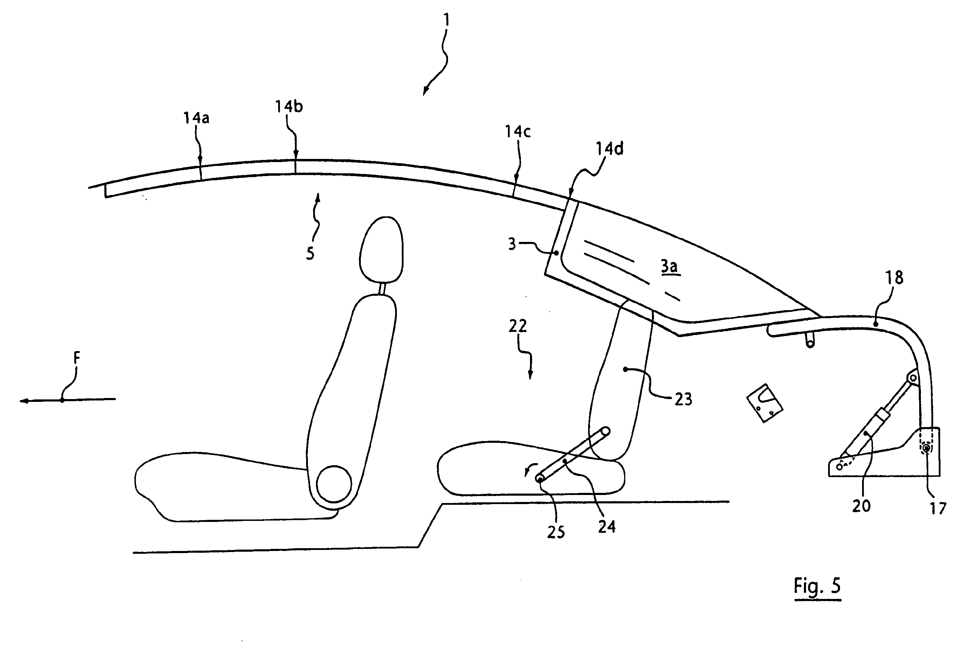

Das im Ausführungsbeispiel dargestellte Cabriolet-Fahrzeug 1 umfaßt des weiteren eine hintere Sitzreihe 22, deren Sitzlehnen 23 aus der hinteren Extremalstellung (Fig. 5) in Fahrtrichtung F verlagerbar sind. Hierzu dient beispielsweise ein Schwenkarm 24, der um ein karosseriefestes Gelenk 25 schwenkbar ist und dabei die Sitzlehne 23 nach vorne verlagert. Auch eine Kulissenführung oder dergleichen ist möglich. Die hintere Extremalstellung der Sitzlehnen 23 stellt die übliche Gebrauchsstellung der hinteren Sitzreihe 22 dar.

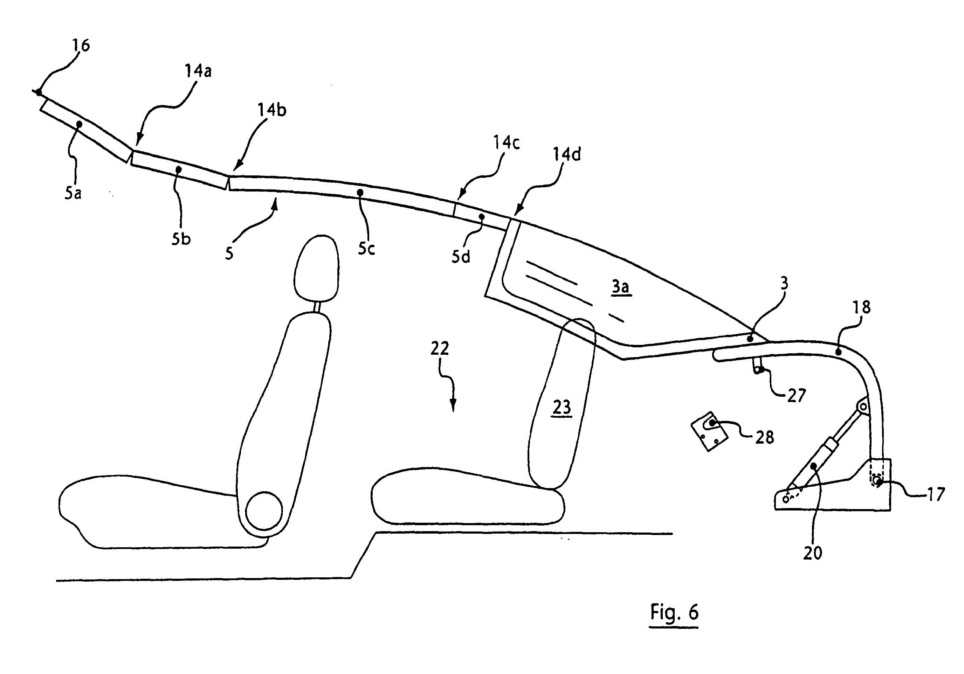

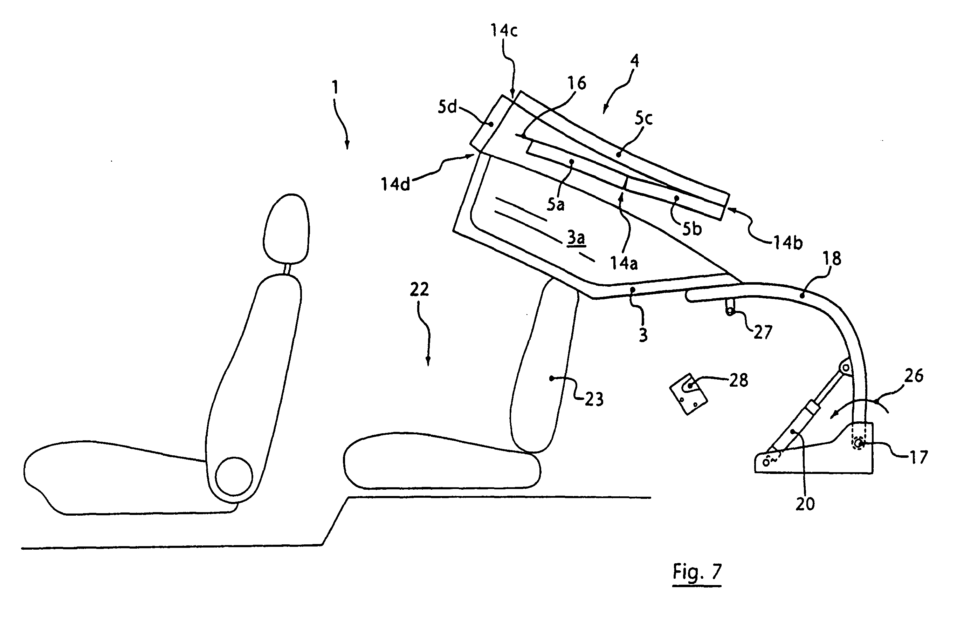

Zum Öffnen des Daches 2 wird zunächst der vordere Querträger 16 vom Windschutzscheibenrahmen 9 abgehoben. Dabei werden die Gelenke 12a,13a,14a, 15a;12b,13b,14b,15b eingeknickt, so daß die dort vorher auf Stoß aneinanderliegenden Abschnitte 5a,5b,5c bzw. 6a,6b,6c der seitlichen Rahmenabstützungen 5,6 sowie 7a,7b,7c und 8a,8b,8c der Längsträger 7,8 gegeneinander abgewinkelt werden (Fig. 6). Die Abschnitte 5a,5b,6a,6b,7a,7b,8a,8b werden dann um nahezu 180° nach hinten aufgeschwenkt und auf den Abschnitten 5c,6c,7c,8c abgelegt (Fig. 2). Im weiteren wird zunächst das Gelenk 12c,13c, 14c,15c eingeknickt, so daß die Bereiche 5c,6c,7c,8c über Durchschreiten einer vertikalen Stellung (Fig. 3) nach hinten abgelegt werden können, wobei die auf den Bereichen 5c,6c,7c,8c liegenden vorderen Abschnitte 5a,5b,6a ,6b,7a,7b,8a,8b in einer Parallelstellung zu den Abschnitten 5c,6c,7c,8c verbleiben. Gleichzeitig wird schließlich auch das Gelenk 12d,13d,14d,15d eingeknickt, wodurch insgesamt nach Art eines Rolldaches der flexible Bereich 4 auf dem starren Dachteil 3 abgelegt wird (Fig. 7). Der Abschnitt 5d,6d,7d,8d steht dabei nahezu vertikal, während die anderen Abschnitte im wesentlichen parallel auf der Heckscheibe 3a aufliegen.

Durch Schwenkbewegung in Richtung des Pfeils 26 (Einziehen der Hydraulikzylinder 20,21 oder manueller Druck gegen die Kraft entsprechend angeordneter Gaszylinder) wird dann das hintere starre Dachteil 3 um die horizontale Schwenkachse 17 abwärtsverschwenkt, wobei wegen des großen Hebelarms um die Schwenkachse 17 nur eine geringe Kraft für ein hinreichendes Drehmoment sowohl beim Absenken als auch beim Anheben des starren Dachteils 3 mit dem darauf liegenden flexiblen Dachteil 4 aufgebracht werden muß.

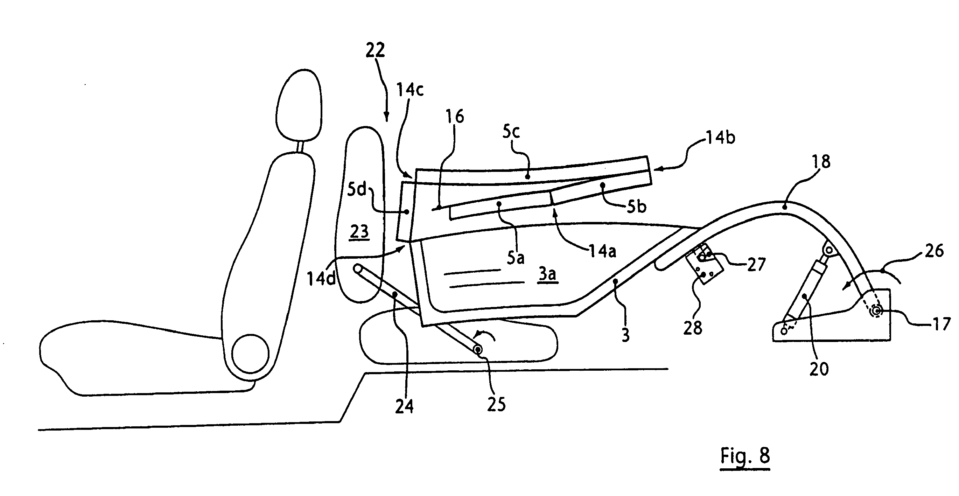

Um Raum für die Ablage des Daches 2 zu schaffen, wird zunächst die Lehne 23 der hinteren Sitzreihe 22 aus der hinteren Extremalstellung (Fig. 7) in die vordere Extremalstellung (Fig. 8) verlagert, so daß der Bereich 22 der hinteren Sitzreihe als Ablageraum für das geöffnete Dach 2 genutzt werden kann.

In Offenstellung (Fig. 8) ist das Dach über an den Auslegern 18,19 angeordnete Achsstummel 27 in Schlössern 28 verriegelbar.

Die Dachöffnung kann, um eine insgesamt kostengünstige Lösung zu erreichen, vollständig manuell erfolgen. Auch eine teilweise manuelle Öffnung, etwa des flexiblen Bereiches 4, und eine mechanisch unterstützte bzw. angetriebene Öffnung des starren Heckbereichs 3 des Daches 2 ist möglich.

Durch die heckseitige und abwärtsverlagerte Schwenkachse 17 sowie die seitlichen Ausleger 18,19 bleibt das Kofferraumvolumen nahezu vollständig erhalten. In Offenstellung ist die Heckscheibe 3a nahezu horizontal gehalten, so daß auch darunter noch Raum zur Aufnahme von Gepäckstücken verbleibt. Somit ist insgesamt eine bezüglich des Kofferraums sehr platzsparende und gleichzeitig preisgünstige Lösung für ein Cabriolet-Fahrzeug geschaffen.

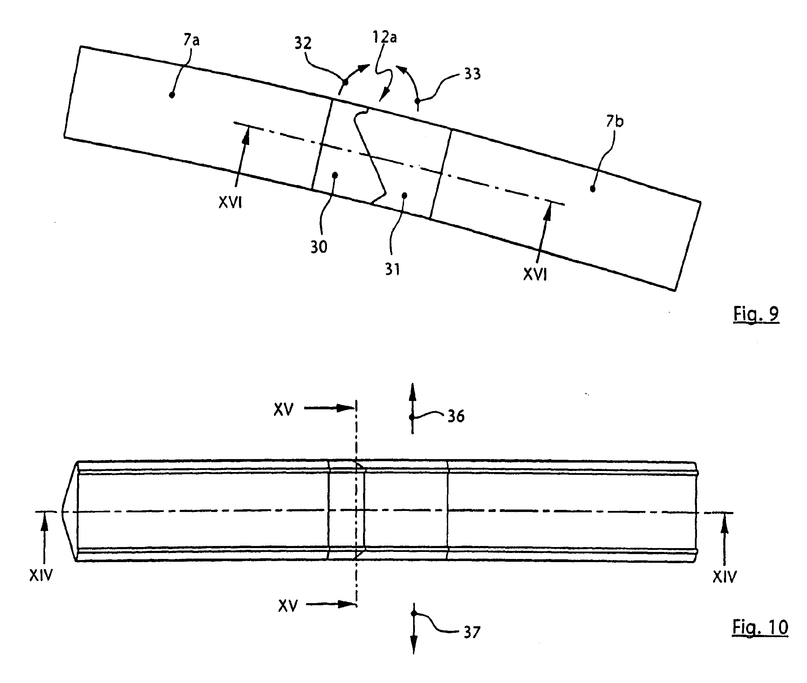

Die Längsträger 7,8 können wie die Seitenträger 5,6 beispielsweise aus einem Kunststoff, insbesondere einem mechanisch hochbelastbaren Kunststoff, wie etwa einem Duroplasten, etwa Polyurethan, bestehen. Die Träger 7,8 sowie die seitlichen Rahmenabstützungen 5,6 sind dabei im wesentlichen gleichartig ausgebildet und umfassen jeweils ein massives Profil, beispielsweise ein Dreiecksprofil (sh. Fig. 9, Fig. 10).

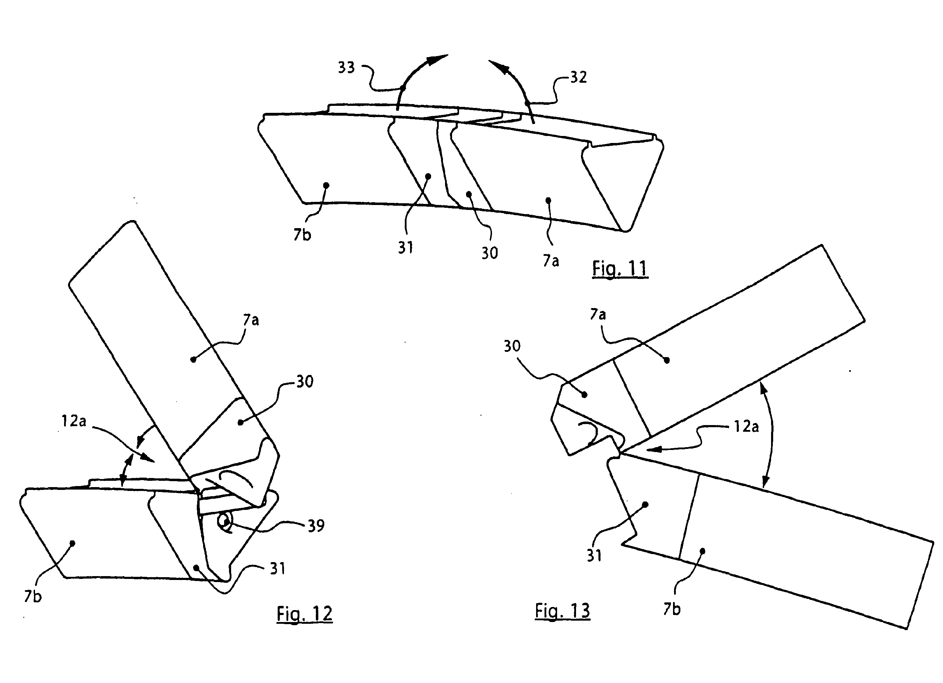

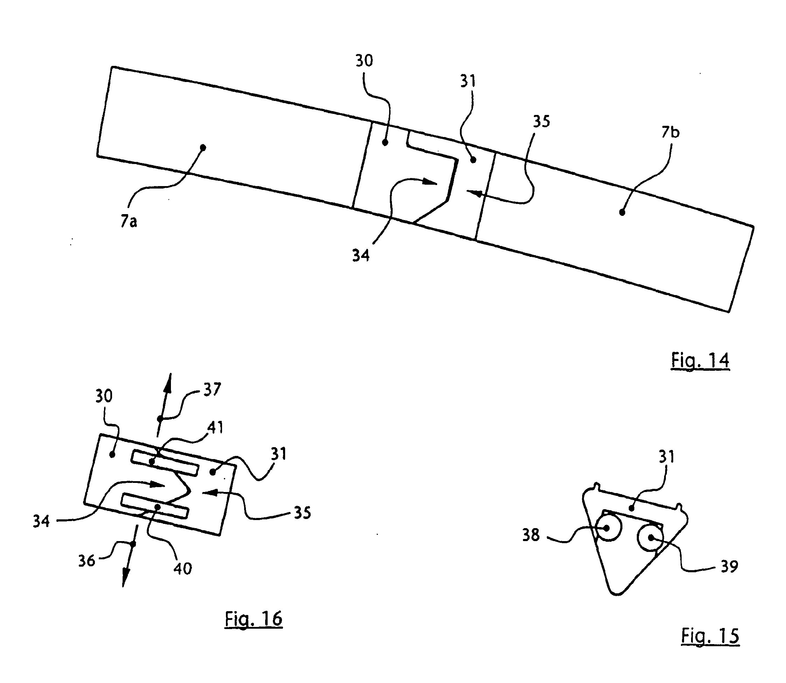

In den Gelenkbereichen 12a,13a,14a,15a,12b,13b,14b,15b,12c,13c,14c,15c weisen die Längsträger 7,8 sowie die äußeren Rahmenabstützungen 5,6 jeweils eine bei geschlossenem Dach einen formschlüssigen Eingriff der Teile sichernde Ausbildung auf, die in den Figuren 9 bis 16 für das Gelenk 12a beschrieben und mit den entsprechenden Bezugszeichen versehen ist. Die Ausbildung ist bei den anderen genannten Gelenken entsprechend.

Die Trägerteile 7a,7b, die am Gelenk 12a aneinanderstoßen, sind im Gelenkbereich jeweils mit Verbindungsstücken 30,31 versehen, wobei die Verbindungsstücke eine besonders große Härte und Verschleißfestigkeit aufweisen und beispielsweise aus einem Metall gebildet sind. Figur 9 zeigt eine Seitenansicht der Teile 7a,7b des Längsträgers 7, die in Richtung der Pfeile 32,33 nach oben hin gegeneinander öffnen können.

Um die formschlüssige Abstützung in alle Richtungen der Teile 30,31 sicherstellen zu können, sind diese über ihren Querschnittsverlauf nicht gleichmäßig ausgebildet, sondern zeigen, wie in dem Schnitt XVI-XVI sichtbar ist, als Grundausbildung eine herausragende Pfeilspitze 34 bzw. eine einwärts zeigende Pfeilspitze 35, wodurch auch Kräfte in Seitwärtsrichtung (Pfeile 36, 37) abgefangen werden können. Zudem sind im wesentlichen axiale Ausnehmungen 38,39 in dem Verbindungsstück 31 vorgesehen, in das entsprechende Stifte 40,41 des Verbindungsstücks 30 eingreifen und somit in Verbindungsstellung die Abschnitte 7a,7b in nahezu unverrückbarer Weise aneinander festlegen, wodurch die einzelnen Träger 7,8 bzw. die äußeren Rahmenabstützungen 5,6 insgesamt jeweils eine Starrheit nahezu wie bei durchgehenden, ungeteilten Trägern aufweisen. Diese Starrheit wird lediglich beim Einfalten um die jeweiligen Gelenkachsen durchbrochen.

Damit ist eine hohe mechanische Stabilität auch des flexiblen Dachbereiches 4 gesichert. Auch bei Überfahren von Fahrbahnunebenheiten ergeben sich keine Klappergeräusche oder Schwingungen der Teile gegeneinander.

Zur zusätzlichen Aussteifung können noch einzelne Querträger, etwa 10,11 zwischen Teilabschnitten, beispielsweise 7b und 8b bzw. 7c und 8c, angeordnet und jeweils an diesen Teilabschnitten 7b,8b,7c,8c festgelegt sein. Diese Querträger 10,11 laufen dann dicht unter der von dem Dachbezug bespannten Oberfläche und sind daher von außen nicht sichtbar.

Nach innen hin kann das flexible Dach bzw. der flexible Dachbereich 4 von einem sogenannten Innenhimmel untergriffen sein, so daß weder die Träger 7,8 noch die Querträger 10,11 oder die Rahmenabstützungen 5,6 vom Innenraum aus sichtbar sind.

## Patentansprüche

1. Cabriolet-Fahrzeug (1) mit einem im rückwärtigen Fahrzeugbereich ablegbaren Dach (2), das ein rückwärtiges, eine Heckscheibe (3a) umfassendes Dachteil (3) enthält, wobei eine karosserieseitige, querverlaufende Horizontalschwenkachse (17) vorgesehen ist, die heckwärts und unterhalb der Erstreckung des hinteren Dachteils (3) angeordnet ist und mit der das hintere Dachteil über sich zwischen diesem und der Achse (17) erstreckenden Auslegern (18, 19) derart verbunden ist, daß es um die genannte Achse (17) verschwenkbar ist, **dadurch gekennzeichnet, daß** die Schwenkachse (17) in geschlossener Stellung des Daches unterhalb und deutlich heckwärts des hinteren Dachteils (3) derart angeordnet ist, daß das hintere Dachteil (3) mit den an diesem starr festgelegten Auslegern (18, 19) um die horizontale Schwenkachse (17) in Fahrtrichtung abwärts (Pfeil 26) verschwenkbar ist.

2. Cabriolet-Fahrzeug nach Anspruch 1, **dadurch gekennzeichnet, daß** dem rückwärtigen Dachteil (3) in Fahrtrichtung (F) zumindest ein weiteres Dachteil (4) vorgeordnet ist, wobei das oder die vor dem rückwärtigen Dachteil befindliche(n) weitere(n) Dachteil(e) (4) in Offenstellung des Daches auf dem rückwärtigen Dachteil (3) ablegbar ist, bzw. sind.

3. Cabriolet-Fahrzeug nach Anspruch 2, **dadurch gekennzeichnet, daß** als vorderes Dachteil (4) ein im wesentlichen flexibles, von in Fahrzeuglängsrichtung erstreckten Trägern (7;8) untergriffenes Faltdachteil vorgesehen ist.

4. Cabriolet-Fahrzeug nach Anspruch 3, **dadurch gekennzeichnet, daß** die Längsträger (7;8) des vorderen Dachteils an mehreren Gelenken (12a,12b,12c, 12d;13a,13b,13c,13d) quer zur Fahrzeuglängsachse einfaltbar sind.

5. Cabriolet-Fahrzeug nach einem der Ansprüche 1 bis 4, **dadurch gekennzeichnet, daß** das oder die vordere(n) Dachteil(e) (4) und das rückwärtige Dachteil (3) von einer gemeinsamen Außenhülle übergriffen sind.

## Claims

1. Convertible vehicle (1) having a roof (2) able to be stowed in the rear part of the vehicle, which roof (2) includes a rear roof-part (3) comprising a rear window (3a), there being provided a transversely extending horizontal axis of pivot/pivot shaft (17) which is in the bodywork, which is arranged to the rear of and below the extent in space of the rear roof-part (3), and to which the rear roof-part is connected, via cantilever arms (18, 19) which extend between it and the axis/shaft (17), in such a way that it is pivotable about the said axis/shaft (17), **characterised in that**, when the roof is in the raised position, the axis of pivot/pivot shaft (17) is arranged below and appreciably to the rear of the rear roof-part (3) in such a way that the rear roof-part (3) can be pivoted downwards in the direction of travel (arrow 26) about the horizontal axis of pivot/pivot shaft (17) by the cantilever arms (18, 19), which are rigidly fastened to the said rear roof-part (3).

2. Convertible vehicle according to claim 1, **characterised in that** the rear roof-part (3) has at least one further roof-part (4) positioned in front of it in the direction of travel (F), the further roof-part or roof-parts (4) situated in front of the rear roof-part being able to be stowed on the rear roof-part (3) when the roof is in the lowered position.

3. Convertible vehicle according to claim 2, **characterised in that** what is provided as a front roof-part (4) is a substantially flexible folding roof-part under which fit supports (7, 8) which extend in the longitudinal direction of the vehicle.

4. Convertible vehicle according to claim 3, **characterised in that** the longitudinal supports (7, 8) of the front roof-part are able to be folded in transversely to the longitudinal axis of the vehicle at a plurality of joints (12a, 12b, 12c, 12d; 13a, 13b, 13c, 13d).

5. Convertible vehicle according to one of claims 1 to 4, **characterised in that** a common outer cover fits over the front roof-part or roof-parts (4) and the rear roof-part (3).

## Revendications

1. Véhicule cabriolet (1) équipé d'un toit (2) rangeable dans une zone de véhicule arrière, qui comprend une partie de toit arrière (3) munie d'une lunette arrière (3a), avec côté carosserie un axe de pivotement horizontal (17) transversal disposé vers l'arrière et en dessous de l'étendue de la partie de toit arrière (3), et relié à la partie de toit arrière à l'aide de bras (18, 19) s'étendant entre celle-ci et l'axe (17) pour faire pivoter la partie arrière autour de cet axe (17),
**caractérisé en ce qu'**
en position fermée du toit, l'axe de pivotement (17) est disposé en dessous et nettement vers l'arrière de la partie de toit arrière (3), pour permettre à la partie de toit arrière (3) et aux bras (18, 19) solidaires de celle-ci de pivoter autour de l'axe de pivotement horizontal (17) vers le bas, dans la direction de conduite (flèche 26).

2. Véhicule cabriolet selon la revendication 1,
**caractérisé en ce que**
dans la direction de conduite (F) au moins une autre partie de toit (4) est disposée, devant la partie de toit arrière (3) la ou les autre(s) partie(s) de toit (4) située(s) avant la partie de toit arrière pouvant être rangée(s) sur la partie de toit arrière (3) lorsque le toit est ouvert.

3. Véhicule cabriolet selon la revendication 2,
**caractérisé en ce que**
la partie de toit avant (4) est une partie de toit pliante essentiellement flexible sous laquelle sont placés des supports (7 ; 8) s'étendant dans la direction longitudinale du véhicule.

4. Véhicule cabriolet selon la revendication 3,
**caractérisé en ce que**
les support longitudinaux (7 ; 8) de la partie de toit avant peuvent être repliés sur plusieurs articulations (12a, 12b, 12c, 12d ; 13a ; 13b ; 13c ; 13d) transversalement à l'axe longitudinal du véhicule.

5. Véhicule cabriolet selon l'une quelconque des revendications 1 à 4,
**caractérisé en ce que**
la ou les partie(s) de toit (4) avant et la partie de toit arrière (3) sont recouvertes par une enveloppe extérieure commune.
